# EUROPEAN PATENT APPLICATION

(11) **EP 4 566 948 A1**
(43) Date of publication of application: **11.06.2025**
(21) Application number: 23215278.5
(22) Date of filing: 08.12.2023
(51) Int. Cl.: B64D 11/02, E03D 1/32, E03D 3/00, E03D 5/00

(54) **AIRCRAFT TOILET WITH HIGH PRESSURE WATER RINSING**

(71) Applicant: Airbus Operations GmbH, 21129 Hamburg (DE)
(72) Inventor: Albers, Frederik, 21129 Hamburg (DE); Müller, Matthias, 21129 Hamburg (DE); Schneider, Frank, 21129 Hamburg (DE); Schreiner, Axel, 21129 Hamburg (DE)

(57) **Abstract**

The present disclosure relates to a toilet rinsing system (100) for an aircraft. The toilet rinsing system (100) comprises a rinse supply pipe (140) configured to be arranged in a toilet bowl (105), a plurality of spray nozzles (145) arranged at or in the rinse supply pipe (140) and configured to form a water jet from water supplied by the rinse supply pipe (140), and a pressure boost device (120) arranged upstream of the plurality of spray nozzles (145) and configured to increase a pressure of the water in the rinse supply pipe (140) corresponding to a predefined minimum velocity of the water jet at each of the plurality of spray nozzles (145). Further disclosed are a toilet and an aircraft comprising such toilet rinsing system (100).

## Description

The present disclosure generally relates to a toilet rinsing system for an aircraft and a corresponding toilet and aircraft having such toilet rinsing system. Particularly, the present disclosure relates to a toilet rinsing system having a pressure boost device to increase a water pressure for rinsing a toilet bowl.

A conventional aircraft toilet include a water rinsing feature, in order to rinse a toilet bowl of the aircraft toilet. The rinsing, i.e. a single toilet flush, requires a water volume of at least 150 ml, often 200 ml, or more, in order to achieve a certain cleaning effect. Usually, potable water is used for flushing a toilet in an aircraft.

The flushing of the toilet in an aircraft, however, has a significant impact on the amount of potable water to be carried in the aircraft, as well as the available volume of the waste water tank capacity receiving the waste water.

It is therefore an object of the present disclosure to provide a toilet rinsing system and aircraft toilet optimised with respect to its water consumption.

This object is solved by the present invention as defined in the independent claims. Preferred embodiments are defined by the dependent claims.

According to a first aspect to better understand the present disclosure, a toilet rinsing system for an aircraft comprises a rinse supply pipe configured to be arranged in a toilet bowl, a plurality of spray nozzles arranged at or in the rinse supply pipe and configured to form a water jet from water supplied by the rinse supply pipe. The toilet rinsing system further comprises a pressure boost device arranged upstream of the plurality of spray nozzles and configured to increase a pressure of the water in the rinse supply pipe corresponding to a predefined minimum velocity of the water jet at each of the plurality of spray nozzles.

Due to the increased pressure and, hence, minimum velocity of the water jet, a more efficient cleaning of the toilet bowl can be achieved. Specifically, in order to clean the toilet bowl from adhering waste particles, a force must be exerted on the waste matter that is greater than its adhesion to the toilet bowl. This force is generated by the change in impulse that the rinse water exerts on the waste matter. Mathematically, this relationship is described by the impulse which is a scalar multiplication of mass and velocity: *̅p̅*̅ = *m* · *v̅.*

Due to the applied pressure boost (increase in pressure) the velocity of the water jet can be increased, which allows a better cleaning result of the surface. This further allows reducing the amount of water used for a single toilet flush with the same cleaning result, compared with a conventional rinsing system operating with the water pressure of a regular potable water supply system.

As mere example, the pressure boost device of the present disclosure can be configured to convey 30 to 250 ml water to the plurality of nozzles, preferably 80 to 120 ml, for one flush of the toilet bowl. Thus, compared to the conventional amount of water required for a toilet flush, a single toilet flush in accordance with the present disclosure can be achieved with less water.

Thus, the required amount of (potable) water to be carried in the aircraft can be reduced due to the reduced amount of water required for each toilet flush. This also allows to reduce the size of the (potable) water tank as well as the waste water tank, so that the overall weight of the aircraft can be reduced. In addition, valuable space in the aircraft can be saved and used otherwise.

The increased pressure of the water at the plurality of nozzles further reduces any scaling deposits at the nozzles, since such scaling deposits can be more easily washed out or can be removed from the nozzles. Thus, the maintenance effort compared to conventional rinsing systems can be reduced.

It is to be understood that the system can likewise operate on greywater instead of potable water. Greywater is waste water that can be collected from drains of certain water consumers, such as a sink, a galley water consumer, a shower, a water fountain or the like, where no harmful contamination (bacteria or the like) is to be expected in the waste water.

In an implementation variant, the rinsing system can further comprise a control unit configured to control operation of the pressure boost device. For instance, the control unit can activate and deactivate the pressure boost device. Furthermore, the control unit can also be configured to operate the pressure boost device to convey a predefined amount of water (e.g., based on a flow metre or timer) and/or to operate the pressure boost device to convey water under a predefined pressure downstream of the pressure boost device.

As mere example, the control unit can be configured to operate the pressure boost device to convey 30 to 250 ml water to the plurality of nozzles, preferably 80 to 120 ml, for one flush of the toilet bowl. Thus, compared to the conventional amount of water required for a toilet flush, a single toilet flush in accordance with the present disclosure can be achieved with less water.

In another implementation variant, the control unit can be configured to activate the pressure boost device and to generate a predefined water pressure downstream of the pressure boost device corresponding to the predefined minimum velocity of the water jet. The predefined water pressure can be set depending on the plurality of nozzles, particularly their opening size and/or type (e.g., a simple hole, a conical nozzle, a rectangular nozzle, etc.) and/or a form of the water jet generated by each nozzle (such as a round stream or jet, a fan-shaped stream or jet, etc.), and the like.

In an implementation variant, the control unit can be further configured to activate the pressure boost device multiple times in a sequence. In other words, instead of a single spray flush, the toilet bowl can be flushed (or rinsed) with a plurality of spray pulses in a predetermined period of time. This achieves a pulsation effect, which can further increase removal of scaling deposits at the nozzles as well as increase the cleaning effect of the toilet bowl.

In yet another implementation variant, the rinsing system can further comprise a vacuum flush valve configured to open or close a vacuum waste pipe at a drain of the toilet bowl. The control unit can then be further configured to open the vacuum flush valve and to activate the pressure boost device with a predefined time delay after opening the vacuum flush valve (with the vacuum flush valve in the open position). This allows generating an air stream through the toilet bowl into the drain of the toilet bowl before starting cleaning the toilet bowl with the water jets at the plurality of nozzles. Thus, it is possible to avoid a distribution of a fine water spray, atomised water spray and/or aerosols in the air surrounding the toilet bowl, such as the toilet cabin or monument, which may otherwise occur due to the higher pressure of the water jets. In addition, due to the air stream, the water jets may be less disturbed, so that the cleaning effect is further increased.

As a mere example, the predefined time delay can be 200 ms to 600 ms, preferably 250 ms to 400 ms. On the one hand, an air stream through the toilet bowl can be created facilitating cleaning the toilet bowl with the water jets. On the other hand, a user flushing the toilet will not be puzzled by two "separately" occurring flushing steps.

It is to be understood that the present disclosure also covers rinsing systems where the opening of the vacuum flush valve occurs simultaneously with activating the pressure boost device or with a predefined time delay after activating the pressure boost device.

In an implementation variant, each of the plurality of spray nozzles can be made from an elastic material, preferably an elastic rubber, configured to squeeze a nozzle opening into a closed position and to expand, when the pressure of the water in the rinse supply pipe exceeds a predefined minimum pressure, so that the nozzle opening opens and forms the water jet. In other words, the end of the rinse supply line at the nozzles is kept close, if the pressure boost device does not operate. This saves water, as the rinse supply pipe does not drain after a flush without any cleaning effect of the (slowly) draining water. In addition, the opening action at a predefined minimum pressure allows for a burst water jet or burst spray towards the toilet bowl for more effective cleaning.

As a mere example, the predefined minimum pressure can be between 1.5 bar to 4 bar (or even higher if necessary), preferably between 1.5 and 2.5 bar, and most preferably can be 2 or 2.5 bar.

In another implementation variant, the predefined minimum pressure can be 0 bar or slightly above (such as 0.1 bar). In other words, the nozzle openings are closed, if the pressure boost device does not operate, so that draining of water from the rinse supply pipe thorough the nozzles is avoided. With increasing pressure provided by the pressure boost devise, the nozzle openings widen, e.g., widen linearly, to release the water jet.

In yet a further implementation variant, the pressure of the water in the rinse supply pipe corresponding to the predefined minimum velocity of the water jet can be 2.5 to 250 bar, preferably 20 to 30 bar.

In a further implementation variant, the pressure boost device or the control unit can be configured to increase the pressure of the water in dependence on a water pressure of a water source upstream of the pressure boost device. The pressure of the water of the water source can differ depending on a location of the rinsing system in the overall water supply system. As a mere example, a pipe length upstream of the pressure boost device or, in case the water supply system is installed in an aircraft, a relative height of the rinsing system within the overall water supply system during different flight situations (ascending or descending angle of the aircraft) can change the water pressure directly upstream at the pressure boost device. Thus, the rinsing system, particularly the pressure boost device, can compensate or equalize such pressure differences and provides for the same pressure in the rinse supply pipe of any rinsing system. Likewise, in case more than one water consumer, such as the rinsing system, is operated in the same water supply system at the same time, the pressure boost device can be configured to compensate for any pressure difference in the water supply system upstream of the pressure boost device caused by the simultaneous water consumption.

In yet another implementation variant, the pressure boost device can comprise a backflow prevention means. The backflow prevention means can be a backflow valve or the like.

As a mere example, the pressure boost device can be a membrane pump, centrifugal pump or piston pump. These types of conveying devices and pressure increasing devices prevent a backflow of water.

In any case, the increased water pressure downstream of the pressure boost device is blocked from entering the upstream (potable) water supply system. In addition, a rinse valve currently installed in conventional toilets (between the toilet bowl and the (potable) water supply system) can be omitted.

In an implementation variant, the rinsing system can further comprise a hygienic separation component provided downstream of the pressure boost device and upstream of the plurality of spray nozzles. As a mere example, the hygienic separation component can be an atmospheric vacuum breaker or can include at least one backflow valve. This allows a hygienic separation between the toilet bowl and the water system, particularly, if the water for flushing the toilet is potable water and the water system (piping) supplies further water consumers, where the water will come into contact with human beings.

In another implementation variant, the pressure boost device and/or the control unit can be configured to convey the water to the plurality of nozzles with a constant pressure and/or flow velocity and/or volume flow. Alternatively, the pressure boost device and/or the control unit can be configured to convey the water to the plurality of nozzles in a pulsating manner. For example, the pulsating manner can be achieved by increasing and decreasing the pressure and/or flow velocity and/or volume flow of the water downstream of the pressure boost device. Pulsating water jets can further increase the cleaning effect in the toilet bowl.

According to a second aspect to better understand the present disclosure, a toilet for an aircraft comprises a toilet bowl, and a toilet rinsing system according to the first aspect or one or more of its variants and examples. At least a portion of the rinse supply pipe of the rinsing system is arranged in the toilet bowl, preferably along an upper rim of the toilet bowl, and the plurality of nozzles is arranged to direct the respective water jet downwards and onto an inner surface of the toilet bowl.

In an implementation variant, the toilet can further comprise a housing, and/or a stand, wherein at least the pressure boost device of the rinsing system is arranged in the housing or the stand. In other words, the pressure boost device (or other components of the rinsing system, or the entire rinsing system) can be provided in spatial vicinity of the toilet bowl. As a mere example, the toilet can be provided as a single unit to be mounted in an aircraft toilet, such as a lavatory monument.

Thus, current aircraft toilets (lavatory monuments) can be retrofitted with the disclosed rinsing system.

In another implementation variant, the toilet for an aircraft can further comprise a (potable) water buffer tank. Such buffer tank may be filled with potable water from a water supply system in the aircraft and buffers a certain amount of water for use in the lavatory and/or toilet. It is to be understood that the buffer tank is arranged in close vicinity to the toilet bowl, such as in the housing or stand, or alternatively in the aircraft toilet or a lavatory monument, so that the buffer tank forms a unit with the toilet rinsing system. Instead of potable water, greywater can be buffered in the buffer tank. In any case, the buffer tank can store water at ambient pressure, while the pressure boost device conveys the water from the buffer tank to the cleaning nozzles of the rinsing system with the required pressure and/or flow velocity and/or volume flow.

According to a third aspect to better understand the present disclosure, an aircraft comprises at least one rinsing system according to the first aspect or one or more of its variants and examples. Alternatively or additionally, the aircraft can further comprise at least one toilet according to the second aspect or one or more of its variants and examples.

The present disclosure is not restricted to the aspects and variants in the described form and order. Specifically, the description of aspects and variants is not to be understood as a specific limiting grouping of features. It is to be understood that the present disclosure also covers combinations of the aspects and variants. Thus, each variant or optional feature can be combined with any other aspect, variant, optional feature or even combinations thereof.

In the following, the present disclosure will further be described with reference to exemplary implementations illustrated in the figures, in which:
- Figure 1: schematically illustrates a rinsing system;
- Figure 2: schematically illustrates a perspective view of a toilet and a cross-sectional view of a detail of the toilet; and
- Figure 3: schematically illustrates an aircraft comprising a plurality of such toilets.

In the following description, for purposes of explanation and not limitation, specific details are set forth in order to provide a thorough understanding of the present disclosure. It will be apparent to one skilled in the art that the present disclosure may be practiced in other implementations that depart from these specific details.

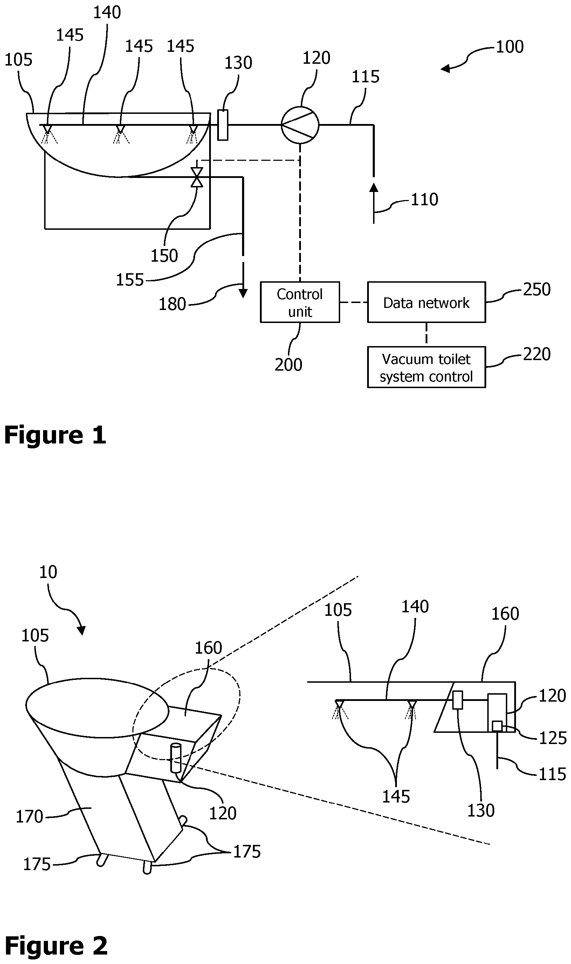

Figure 1 schematically illustrates a rinsing system 100 comprising a rinse supply pipe 140 that can be arranged in a toilet bowl 105. For instance, the rinse supply pipe 140 can be arranged at an upper edge or rim of the toilet bowl 105. A plurality of spray nozzles 145 are arranged at or in the rinse supply pipe. Each of the nozzles 145 provides a fluid connection from the (interior of the) rinse supply pipe 140 to the interior space of the toilet bowl 105, so that water transported by the rinse supply pipe 140 can be released through the nozzles 145.

Thereby, each nozzle 145 is configured to form a water jet from the water supplied by the rinse supply pipe 140. For instance, the water jet of each nozzle 145 is directed downwards into the toilet bowl 105 and preferably onto an inner surface of the toilet bowl 105. Thus, each water jet and/or a water film created by the water jets on the inner surface of the toilet bowl 105 exerts a force on any waste material adhered to the inner surface of the toilet bowl 105. This allows cleaning the toilet bowl 105 by removing any such waste material.

In order to generate the water jets, the toilet rinsing system 100 further comprises a pressure boost device 120 arranged upstream of the plurality of spray nozzles 145.

The pressure boost device 120 can be a pump (e.g., membrane pump, centrifugal pump, piston pump, etc.), a compressor or the like, which increases a pressure of the water in the rinse supply pipe 140. Increasing the pressure means that the pressure of water in the rinse supply pipe 140 is higher than in a water supply pipe 115 supplying water from a water system 110.

As a mere example, the pressure in the water supply pipe 115 (of an overall water supply system 110) can differ depending on the location (relative height) within the system 110, a length of the pipe 115, or the number of simultaneously operating water consumers (also) connected to the pipe 115.

The pressure boost device 120 increases the pressure of the water in the rinse supply pipe 140 to correspond to a predefined minimum velocity of the water jet at each of the plurality of spray nozzles 145. In other words, a water pressure is provided that allows ejecting the water through each nozzle 145 with a predefined minimum velocity.

The water pressure provided at each spray nozzle 145 can be 2.5 to 250 bar, preferably 20 to 30 bar. The number of spray nozzles 145 in the rinse supply pipe 140 can be 2 to 10, preferably there are 3 to 5 nozzles per toilet bowl.

The rinsing of the toilet bowl 105 may be facilitated by a vacuum flush valve 150 configured to open or close a vacuum waste pipe 155 at a drain of the toilet bowl 105. The drain of the toilet bowl 105 is preferably arranged at the lowest section of the toilet bowl 105. The vacuum waste pipe 155 is connected to a vacuum toilet system 180 (waste system). Such vacuum flush valve 150, vacuum waste pipe 155 and vacuum waste water system 180 may correspond to conventional vacuum waste water components and associated vacuum waste water system 180.

The rinsing system 100 can further comprise a control unit 200 configured to control operation of the pressure boost device 120. The control unit 200 can activate the pressure boost device 120 and generates a predefined water pressure downstream of the pressure boost device 120 corresponding to the predefined minimum velocity of the water jet. For instance, the control unit 200 can control the pressure boost device 120 by adjusting a speed of a pump forming the pressure boost device 120 and/or adjusting a supply voltage and/or current supplied to the pressure boost device 120.

Furthermore, the control unit 200 can also be configured to open the vacuum flush valve 150 in dependence on a flushing signal. Such flushing signal may be received from a button (not illustrated) operated by a user indicating the desire to flush the toilet bowl 105. Likewise, the control unit 200 can be configured to control operation of the pressure boost device 120 in dependence on the flushing signal.

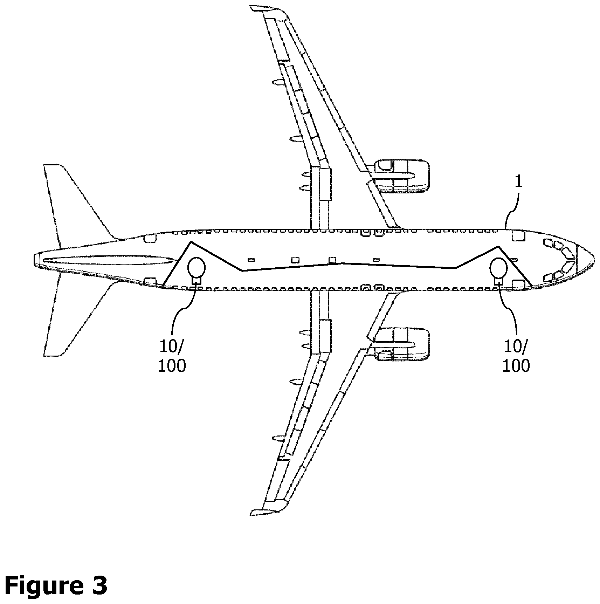

Opening the vacuum flush valve 150 by the control unit 200 can include sending a valve operation signal to a vacuum toilet system control 220, for example, via a data network 250 of the aircraft 1 (Figure 3). Such vacuum toilet system control 220 and network 250 can be a conventional control and network and/or an already present control and network in an existing aircraft 1. Thus, the rinsing system can be retrofitted to existing aircraft lavatories and toilets by simply replacing the toilet bowl 105 having the rinsing system 100 as disclosed herein.

Moreover, the control unit 200 can be configured to open the vacuum flush valve 150 and to activate the pressure boost device 120 with a predefined time delay after opening the vacuum flush valve 150. Such time delay can be 200 ms to 600 ms, preferably 250 ms to 400 ms allowing an air stream to be created in the toilet bowl 105 before water is sprayed through the spray nozzles 145. Otherwise, the control unit 200 can be configured to open the vacuum flush valve 150 and activate the pressure boost device 120 at the same time, or even activate the pressure boost device 120 before opening the vacuum flush valve 150.

The control unit 200 can alternatively or additionally be configured to operate the pressure boost device 120 to convey a predefined amount of water for a single flush of the toilet bowl 105. The predetermined amount of water can be between 30 to 250 ml water, preferably 80 to 120 ml, conveyed by the pressure boost device 120 to the plurality of nozzles 145. The number of nozzles can be 2 to 10, preferably 3 to 5.

In addition, a hygienic separation component 130 can be provided downstream of the pressure boost device and upstream of the plurality of spray nozzles 145. Thus, it can be avoided that harmful particles (bacteria, etc.) will enter and contaminate the (potable) water system 110, 115.

Figure 2 schematically illustrates a perspective view of a toilet 10 (to the left in Figure 2) and a cross-sectional view of a detail of the toilet 10 (to the right in Figure 2, its location being indicated by broken lines).

The toilet 10 comprises a toilet bowl 105 and a housing 160 and/or a stand 170. For instance, the stand 170 can comprise one or more feet 175 configured to allow mounting of the toilet 10 to a floor in the aircraft 1 (Figure 3). It is to be understood that the housing 160 and stand 170 may be combined and not separate elements as illustrated in Figure 2. Furthermore, instead of one or more feet 175, the toilet 10 can be mounted to a wall, for example, with corresponding holders (not illustrated) at the housing 160.

The toilet 10 further comprises a rinsing system 100 as explained with respect to Figure 1. The pressure boost device 120 of the rinsing system 100 can be arranged in the housing 160 or the stand 170. As can be derived from the detailed view of Figure 2, piping/ducting and further components of the rinsing system 100, such as the hygienic separation component 130 and/or a backflow prevention means 125 can also be arranged in the housing 160 and/or stand 170. As a mere example, the vacuum flush valve 150 and (at least a portion of) the vacuum waste pipe 155 can be arranged in the stand 170 (or the housing 160 or both, if combined).

Such configuration allows removing an existing toilet from an aircraft lavatory and replacing it with a toilet 10 including the described rinsing system 100 of the present disclosure. As illustrated in Figure 2, the housing 160 of the disclosed toilet 10 is equipped with a water connection 115 allowing to fluidly connect the toilet 10 with an existing water supply system 110. The exemplary illustrated housing 160 in Figure 2 encloses a backflow prevention means 125, the pressure boost device 120 and a portion of the rinse supply pipe 140. The latter extends into the toilet bowl 105, for example, at an upper rim thereof. Arranged in the portion of the rinse supply pipe 140 (i.e., in the toilet bowl 105) is the plurality of spray nozzles 145 creating a water jet directed into the toilet bowl 105 and particularly onto an inner surface of the toilet bowl 105.

Furthermore, the rinsing system 100 further allows for easy draining of the water system 110. Specifically, water in the rinse supply pipe 140 can be simply drained in the toilet, e.g., if the nozzles 145 are configured to be always open. In case the nozzles 145 are self-closing, e.g., if made from an elastic material configured to achieve a closed position when no pressure acts on the respective nozzle, the pressure boost device 120 can be operated while draining. This may include operating the pressure boost device 120 with air from pipe 115 to press/drain any water out of pipe 140. Figure 3 schematically illustrates an aircraft 1 comprising at least one toilet 10, such as the toilet 10 of Figure 2. Specifically, the toilet(s) 10 in the aircraft 1 can each be equipped with the toilet rinsing system 100 as disclosed herein and exemplarily illustrated in Figure 1.

As can be derived from Figure 3, the toilets 10 are located at different positions in the aircraft 1. Thus, a pipe length of the water connection 115, e.g., from a central water tank (not illustrated), to each toilet 10 will differ. Likewise, if the aircraft 1 ascend or descends, the toilets 10 will each have a different relative height (to one another as well as relative to the central water tank). This will lead to a different water pressure in the water connection 115 of each toilet. The rinsing system 100 can compensate for such differences.

It is believed that the advantages of the technique presented herein will be fully understood from the foregoing description, and it will be apparent that various changes may be made in the form, constructions and arrangement of the exemplary aspects thereof without departing from the scope of the disclosure or without sacrificing all of its advantageous effects. Because the technique presented herein can be varied in many ways, it will be recognized that the disclosure should be limited only by the scope of the claims that follow.

## Claims

1. A rinsing system (100) for an aircraft (1), comprising:
a rinse supply pipe (140) configured to be arranged in a toilet bowl (105);
a plurality of spray nozzles (145) arranged at or in the rinse supply pipe (140) and configured to form a water jet from water supplied by the rinse supply pipe (140); and
a pressure boost device (120) arranged upstream of the plurality of spray nozzles (145) and configured to increase a pressure of the water in the rinse supply pipe (140) corresponding to a predefined minimum velocity of the water jet at each of the plurality of spray nozzles (145).

2. The rinsing system (100) of claim 1, further comprising:
a control unit (200) configured to control operation of the pressure boost device (120),
wherein, preferably, the control unit (200) is configured to activate the pressure boost device (120) and to generate a predefined water pressure downstream of the pressure boost device (120) corresponding to the predefined minimum velocity of the water jet.

3. The rinsing system (100) of claim 2, further comprising:
a vacuum flush valve (150) configured to open or close a vacuum waste pipe (155) at a drain of the toilet bowl (105),
wherein the control unit (200) is further configured to open the vacuum flush valve (150) and to activate the pressure boost device (120) with a predefined time delay after opening the vacuum flush valve (150).

4. The rinsing system (100) of one of claims 1 to 3, wherein each of the plurality of spray nozzles (145) is made from an elastic material, preferably an elastic rubber, configured to squeeze a nozzle opening into a closed position and expands, when the pressure of the water in the rinse supply pipe (140) exceeds a predefined minimum pressure, so that the nozzle opening opens and forms the water jet.

5. The rinsing system (100) of one of claims 1 to 4, wherein the pressure of the water in the rinse supply pipe (140) corresponding to the predefined minimum velocity of the water jet is 2.5 to 250 bar, preferably 20 to 30 bar.

6. The rinsing system (100) of one of claims 1 to 5, wherein the pressure boost device (120) or the control unit (200) is configured to convey 30 to 250 ml, preferably 80 to 120 ml, water to the plurality of nozzles (145) for one flush of the toilet bowl (105).

7. The rinsing system (100) of one of claims 1 to 6, wherein the pressure boost device (120) comprises a backflow prevention means (125), or
wherein the pressure boost device (120) is a membrane pump, centrifugal pump or piston pump preventing a backflow.

8. The rinsing system (100) of one of claims 1 to 7, further comprising:
a hygienic separation component (130) provided downstream of the pressure boost device (120) and upstream of the plurality of spray nozzles (145),
wherein, preferably, the hygienic separation component (130) is an atmospheric vacuum breaker or includes at least one backflow valve.

9. A toilet for an aircraft (1), comprising:
a toilet bowl (105); and
a rinsing system (100) of one of claims 1 to 8,
wherein at least a portion of the rinse supply pipe (140) is arranged in the toilet bowl (105), preferably along an upper rim of the toilet bowl (105), and
wherein the plurality of nozzles (145) is arranged to direct the respective water jet downwards and onto an inner surface of the toilet bowl.

10. The toilet of claim 9, further comprising:
a housing (160); and/or
a stand (170),
wherein at least the pressure boost device (120) of the rinsing system (100) is arranged in the housing (160) or the stand (170).

11. An aircraft (1), comprising:
at least one rinsing system (100) of one of claims 1 to 8; and/or
at least one toilet of claim 9 or 10.
